# EUROPEAN PATENT SPECIFICATION

(11) **EP 0 770 512 B1**
(45) Date of publication and mention of the grant of the patent: **29.07.1998**
(21) Application number: 95830448.7
(22) Date of filing: 23.10.1995
(51) Int. Cl.: B60N 2/00, B60N 2/48

(54) **Headrest for motor-vehicle seats**
Kopfstütze für Kraftfahrzeugsitze
Appui-tête pour siège de véhicule automobile

(43) Date of publication of application: 02.05.1997
(73) Proprietor: GESTIND-M.B." MANIFATTURA DI BRUZOLO" S.P.A, I-10050 Bruzolo (Torino) (IT)
(72) Inventor: De Filippo, Emilio, I-10050 Bruzolo (Torino) (IT)
(74) Representative: Buzzi, Franco

(56) References cited:
- EP-A- 0 322 373
- EP-A- 0 582 765
- EP-A- 0 603 136
- DE-A- 4 222 921
- FR-A- 1 561 172
- FR-A- 2 577 869
- PATENT ABSTRACTS OF JAPAN vol. 006 no. 246 (M-176) ,4 December 1982 & JP-A-57 144135 (TOYO KOGYO KK;OTHERS: 01) 6 September 1982,

## Description

The present invention relates to headrests for motor-vehicle seats, comprising a resilient body incorporating a framework of moulded plastics material having two spaced-apart hollow parts housing a pair of support rods, and in which adjustment means are provided for the stepwise height adjustment of the resilient body relative to the support rods.

Headrests of the above-referenced type are known, for instance, from FR-A-2 577 869 and EP-A-0 322 373 in the name of the same Applicant.

More particularly, the invention is directed to a headrest of the type set forth in the above wherein, as in FR-A-2 577 869, said adjustment means include locking means carried by the framework for engaging positioning notches formed on the support rods.

In the arrangements according to the above-mentioned prior art the said locking means comprise resilient members, whereby disengagement between the support rods and the resilient body of the headrest, so as to perform in use the vertical adjustment thereof, is simply carried out by pushing or pulling the resilient body along the axial direction of the support rods.

This construction may involve risks of undesired withdrawal of the resilient body relative to the support rods, for instance in case of collisions of the vehicle on which the headrest is installed, with dangerous consequences for the passengers.

The object of the present invention is to provide a headrest for motor-vehicle seats overcoming the above drawback, with a light and relatively simple and economical construction.

According to the invention, this object is achieved by virtue of the fact that, in a headrest for motor-vehicle seats of the type set forth at the beginning, the support rods are axially slidably fitted within respective tubular members housed inside said hollow parts of the framework and relative to which the resilient body can swing between angular engagement and respectively disengagement positions between said locking means and said positioning notches; each of said tubular members having an upper end provided with a pair of lateral opposed apertures receiving rocking pin arms of a respective transverse fork element fitted in a corresponding seat of the respective hollow part of the framework, and a lower end having a front opening and a rear projection to which a respective thrust spring is associated, tending to maintain said resilient body in said engagement angular position, and of the fact that said locking means comprise a pair of metal straps fitted within said framework so as to engage the positioning notches of said support rods, in the engagement angular position of said resilient body, through the front openings of said tubular members.

Thanks to this solution, displacement of the resilient body along the axial direction of the support rods can be performed only after tilting the resilient body to the angular disengagement position. Upon reaching the desired adjustment position, it is sufficient to release the resilient body, whereby same is urged by the thrust springs to the angular engagement position and thus locked in the axial direction of the support rods, so as to prevent any risks of accidental or undesired withdrawal.

Each thrust spring is conveniently wound over the rear projection of the respective tubular member and directly bears against the wall of the corresponding hollow part of the framework.

Additionally, each of said transverse fork elements may to advantage be resilient and snap fitted into the corresponding seat of the respective hollow part of the framework.

Further features and advantages of the invention will become apparent from the detailed description which follows with reference to the accompanying drawings, purely provided by way of non-limiting example, in which:
figure 1 is a front elevational and partially sectioned view of a headrest according to the present invention,
figure 2 is a partial vertical section along line II-II of figure 1, with the headrest body shown in a first position,
figure 3 is a view similar to figure 2 with the headrest body shown in a second position,
figure 4 is a horizontally sectioned and enlarged view along line IV-IV of figure 2, and
figure 5 is a horizontally sectioned and enlarged view along line V-V of figure 2.

Referring to the drawings, reference numeral 1 generally designates a headrest intended to be installed on top of the backrest of a motor-vehicle seat (not shown).

The headrest 1 comprises a resilient body or pillow 2, normally made of foamed plastics material having an outer covering 3, and a load-bearing framework 4 incorporated within the resilient body 2.

The framework 4 is formed in one piece of moulded plastics material and comprises two spaced-apart hollow parts 5 having a substantially quadrangular cross section progressively widening towards the base of the framework 4, indicated as 6, in correspondence of which a cover 7 is secured.

The two hollow parts 5, which are closed at the top thereof, receive a pair of support rods 8 intended to be fixed lowerly, in a known way, to the structure of the seat backrest.

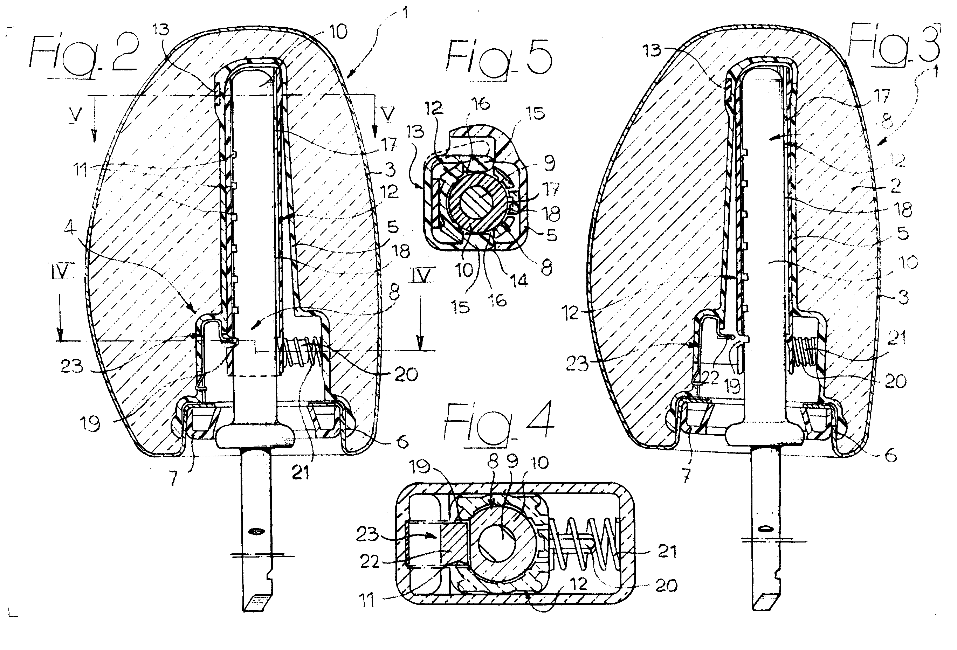

Each support rod 8 is formed by a cylindrical metal core 9 (figures 4 and 5) over which a thick covering 10 of plastics material is applied by moulding.

On the front side (i.e. the one facing towards the front face of the headrest 1) of the covering 10 of each support rod 8, a vertical row of notches 11 is formed, which are intended, as clarified herebelow, for height adjustment of the resilient body 2 relative to the support rods 8.

On its rear side, the covering 10 of each support rod 8 is formed with an upper key appendage 17.

Between each support rod 8 and the respective hollow part 5 of the framework 4 a corresponding tubular member 12 is interposed, also made of moulded plastics material. Each tubular member 12 is housed with angular clearance within the respective hollow part 5, and each support rod 8 is axially slidably fitted within the respective tubular member 12.

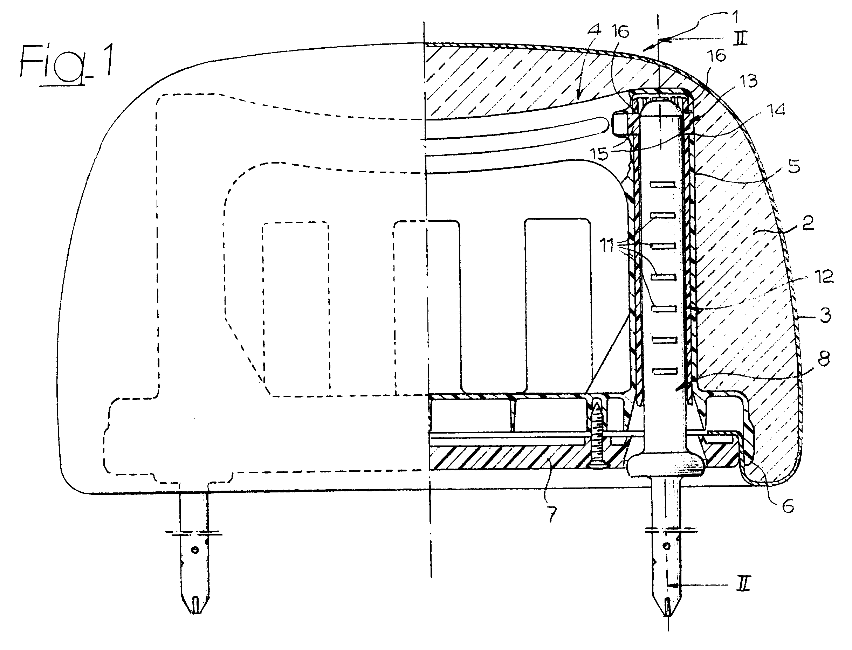

As shown in details in figure 2, each tubular member 12 is connected superiorly to the corresponding upper area of the respective hollow part 5 in a swingable way, by means of a transverse fork element 13 housed in a corresponding seat 14 of the tubular part 5 and having a pair of rocking pin arms 15 received into corresponding lateral apertures 16 of the tubular member 12. The fork element 13 is resilient and mounting thereof into the seat 14, together with engagement of the pin arms 15 into the aperture 16, is performed by snap fitting.

This construction enables the resilient body 2 to swing relative to the support rods 8, such as better clarified in the following, between an angular engagement position depicted in figure 2, and an angular disengagement position shown in figure 3.

Each tubular element 12 is innerly formed with a centering axial groove 18 along which the key appendage 17 of the respective support rod 8 is slidably fitted. Moreover, near to its lower end, each tubular member 12 is provided with a front opening 19, aligned with the notches 11 of the respective support rod 8, and with an integral rear projection 20 over which a helical spring 21 is wound, directly reacting against the rear wall of the respective hollow part 5.

The front opening 19 of each tubular member 12 cooperates with a locking tooth 22 formed by the end of a respective metal bent strap 23 secured in the corresponding front area of the hollow part 5.

Operation of the headrest 1 according to the invention is as follows.

Normally the resilient body 1 is maintained in the angular engagement position, depicted in figure 2, wherein the thrust springs 21 act so as to keep the locking teeth 22 engaged within corresponding notches 11 of the support rods 8, through the front openings 19 of the tubular members 12. The selected notches 11 will correspond to a certain height positioning of the resilient body 2 relative to the support rods 8.

In this condition undesired or accidental sliding of the resilient body 2 along the support rod 8 is prevented.

In order to adjust the height positioning of the resilient body 1 along the support rods 8, it is necessary to tilt the resilient body 2 around the axis of the rocking pins 15, in the direction corresponding to compression of the thrust springs 21. In this way the resilient body 2 is set in the angular disengaged position depicted in figure 3, wherein the locking teeth 22 are withdrawn from the front openings 19 of the tubular members 12, and thus from the notches 11 of the respective support rods 8. The resilient body 2 can thus be displaced along the axial direction of the support rods 8, so as to vary the height positioning thereof, due to sliding of the tubular members 12 relative to the rods 8.

Upon reaching the desired height positioning, the resilient body 1 is released and thus pushed by the action of the thrust springs 21 to the initial engagement position, shown in figure 2.

Naturally, the details of construction of the invention may be modified with respect to what has been described and illustrated, if not departing from the scope of the present invention such as defined in the appended claims.

## Claims

1. Headrest (1) for motor-vehicle seats, comprising a resilient body (2) incorporating a moulded plastics material framework (4) having two spaced-apart hollow parts (5) housing a pair of support rods (8), and wherein adjustment means (11, 22) are provided for the stepwise height adjustment of the resilient body (2) relative to the support rods (8), said adjustment means including locking means (22) carried by the framework (4) for engaging positioning notches (11) formed on said support rods (8), characterized in that the support rods (8) are axially slidably fitted within respective tubular members (12) housed inside said hollow parts (5) of the framework (4) and relative to which the resilient body (2) can swing between angular engagement and respectively disengagement positions between said locking means (22) and said positioning notches (11); each of said tubular members (12) having an upper end provided with a pair of opposed lateral apertures (16) receiving rocking pin arms (15) of a respective transverse fork element (13) fitted in a corresponding seat (14) of the respective hollow part (5) of the framework (4), and a lower end having a front opening (19) and a rear projection (20) to which a respective thrust spring (21) is associated, tending to maintain said resilient body (2) in said angular engagement position, and by the fact that said locking means comprise a pair of metal straps (23) fitted within said framework (4) so as to engage the positioning notches (11) of said support rods (8), in the angular engagement position of said resilient body (2), through the front openings (19) of said tubular members (12).

2. Headrest according to claim 1, characterized in that each thrust spring (21) is wound over said rear projection (20) of the respective tubular member (12) and directly bears against the wall of the corresponding hollow part (5) of the framework (4).

3. Headrest according to claim 1 or claim 2, characterized in that each of said transverse fork element (13) is resilient and is snap fitted into the corresponding seat (14) of the respective hollow part (5) of the framework (4).

4. Headrest according to any of the preceding claims, characterized in that each support rod (8) is provided with a plastics material covering (10) moulded over a metal core (9), on the front side of which said positioning notches (11) are formed and on the rear side of which a reference key projection (17) is formed, slidably engaged along a corresponding inner rear groove (18) of the respective tubular member (12).

## Patentansprüche

1. Kopfstütze (1) für Kraftfahrzeug-Sitze, aufweisend einen elastischen Körper (2), der ein geformtes Kunststoffmaterial-Tragwerk (4) enthält, das zwei beabstandete Hohlteile (5) hat, die ein Paar von Haltestäben (8) aufnehmen, und wobei Einstelleinrichtungen (11, 22) vorgesehen sind für die stufenweise Höhenverstellung des elastischen Körpers (2) relativ zu den Haltestäben (8), wobei die Einstelleinrichtungen Verriegelungseinrichtungen (22) aufweisen, die durch das Tragwerk (4) getragen werden, um Positionierkerben (11), die an den Haltestäben (8) gebildet, in Eingriff zu stellen, **dadurch gekennzeichnet**, daß die Haltestäbe (8) axial gleitfähig eingepaßt sind in jeweiligen rohrförmigen Elementen (12), die innerhalb der Hohlteile (5) des Tragwerks (4) aufgenommen sind und relativ zu welchen der elastische Körper (2) zwischen jeweiligen winkelmäßigen Eingriffs- und Lösungspositionen zwischen der Verriegelungseinrichtung (22) und den Positionierkerben (11) schwingen bzw. schwenken kann; wobei jedes der rohrförmigen Elemente (12) ein oberes Ende hat, das mit einem Paar von gegenüberliegenden seitlichen Öffnungen (16) versehen ist, die schwingende bzw. hin- und herbewegende Zapfenarme (15) eines jeweiligen Quergabelelementes (13) aufnehmen, eingepaßt in einen entsprechenden Sitz (14) des jeweiligen Hohlteils (5) des Tragwerks (4), und ein unteres Ende, das eine Vorderöffnung (19) und einen Rückvorsprung (20) hat, mit dem eine jeweilige Schubfeder (21) verbunden ist, die dazu neigt, den elastischen Körper (2) in der winkelmäßigen Eingriffsposition zu halten, und dadurch, daß die Verriegelungseinrichtung ein Paar von Metallbändern (23) aufweist, eingepaßt in dem Tragwerk (4), um die Positionierkerben (11) der Haltestäbe (8) einzugreifen, und zwar in der winkelmäßigen Eingriffsposition des elastischen Körpers (2), und zwar durch die Vorderöffnungen (19) der rohrförmigen Elemente (12).

2. Kopfstütze gemäß Anspruch 1, **dadurch gekennzeichnet, daß** jede Schubfeder (21) gewickelt ist über den Rückvorsprung (20) des jeweiligen rohrförmigen Elementes (12) und direkt gegen die Wand des entsprechenden Hohlteils (12) des Tragwerks (4) anliegt.

3. Kopfstütze gemäß Anspruch 1 und Anspruch 2, **dadurch gekennzeichnet, daß** jedes Quergabelelement (13) elastisch ist und eingerastet ist in dem entsprechenden Sitz (14) des jeweiligen Hohlteils (5) des Tragwerks (4).

4. Kopfstütze gemäß einem der vorhergehenden Ansprüche, **dadurch gekennzeichnet, daß** jeder Haltestab (8) mit einer Kunststoffmaterial-Deckschicht (10) versehen ist, die geformt ist über einem Metallkern (9), auf der vorderen Seite dessen die Positionierkerben (11) gebildet sind und auf der Hinterseite dessen ein Bezugsschlüssel-Vorsprung (17) gebildet ist, und zwar gleitfähig im Eingriff längs einer entsprechenden inneren hinteren Rille (18) des jeweiligen rohrförmigen Elementes (12).

## Revendications

1. Appui-tête (1) pour des sièges de véhicule à moteur, comportant un corps élastique (2) comprenant un cadre en matière plastique moulée (4) ayant deux parties creuses espacées (5) renfermant une paire de tiges de support (8), et dans lequel des moyens de réglage (11, 22) sont prévus pour le réglage en hauteur par palier du corps élastique (2) par rapport aux tiges de support (8), lesdits moyens de réglage comprenant des moyens de blocage (22) porté par le cadre (4) pour l'engagement d'encoches de positionnement (11) formées sur lesdites tiges de support (8), caractérisé en ce que les tiges de support (8) sont montées de façon axialement coulissante dans des éléments tubulaires (12) respectifs logés à l'intérieur desdites pièces creuses (5) du cadre (4) et par rapport auxquelles le corps élastique (2) peut basculer entre des positions angulaires respectivement d'engagement et de désengagement entre lesdits moyens de blocage (22) et lesdites encoches de positionnement (11); chacun desdits éléments tubulaires (12) ayant une extrémité supérieure pourvue d'une paire d'ouvertures latérales opposées (16) recevant des bras de basculement (15) d'un élément de fourche transversal (13) respectif monté dans un siège correspondant (14) de la partie creuse (5) respective du cadre (4), et une extrémité inférieure ayant une ouverture avant (19) et une saillie arrière (20) à laquelle est associé un ressort de poussée (21) respectif, tendant à maintenir ledit corps élastique (2) dans ladite position angulaire d'engagement, et par le fait que lesdits moyens de blocage comportent une paire de pattes en métal (23) montées dans ledit cadre (4) afin d'engager les encoches de positionnement (11) desdites tiges de support (8), dans la position angulaire d'engagement dudit corps élastique (2), à travers les ouvertures avant (19) desdits éléments tubulaires (12).

2. Appui-tête selon la revendication 1, caractérisé en ce que chaque ressort de poussée (21) est enroulé sur ladite saillie arrière (20) de l'élément tubulaire respectif (12) et appuie directement contre la paroi de la partie creuse correspondante (5) du cadre (4).

3. Appui-tête selon la revendication 1 ou la revendication 2, caractérisé en ce que chacun desdits éléments de fourche transversaux (13) est élastique et est encliqueté dans le siège correspondant (14) de la partie creuse respective (5) du cadre (4).

4. Appui-tête selon l'une quelconque des revendications précédentes, caractérisé en ce que chaque tige de support (8) est pourvue d'un revêtement en matière plastique (10) moulé sur une âme métallique (9), sur le côté avant de laquelle sont formées lesdites encoches de positionnement (11) et sur le côté arrière de laquelle est formée une saillie de clavette de référence (17), engagée de façon coulissante le long d'une rainure arrière intérieure (18) correspondante de l'élément tubulaire (12) respectif.
